# EUROPEAN PATENT SPECIFICATION

(11) **EP 1 280 365 B1**
(45) Date of publication and mention of the grant of the patent: **28.02.2007**
(21) Application number: 02017067.6
(22) Date of filing: 29.07.2002
(51) Int. Cl.: H04Q 7/30, H04Q 7/38

(54) **Subscriber redirection**
Teilnehmersumlenkung
Redirection d'utilisateurs

(30) Priority: 27.07.2001 EP 01118389
(43) Date of publication of application: 29.01.2003
(73) Proprietor: TELEFONAKTIEBOLAGET LM ERICSSON (publ), 164 83 Stockholm (SE)
(72) Inventor: Turina, Klaus, 71522 Backnang (DE); Jukic, Zdravko, 52134 Herzogenrath (DE)
(74) Representative: Kribber, Klaus-Dieter

(56) References cited:
- US-A- 6 091 953
- US-A- 6 097 951
- "3rd Generation Partnership Project;Technical Specification Group Services and System Aspects; Intra Domain Connection of RAN Nodes to multiple CN Nodes; (Release 5) V1.0.0" 3GPP TS 23.236 V1.0.0, XX, XX, 17 June 2001 (2001-06-17), pages 1-16, XP002200683

## Description

The invention addresses the field of mobile communications. It relates to a device and a method for a controlled redirection of subscribers in mobile networks, in particular with pooled core network nodes.

### Background of the invention

Currently are third generation telecommunication systems (3GPP) developed that support node pooling. The underlying concept is known under the term Iu-Flexibility. Reference is made in particular with respect to 3GPP Release 5 specifications to the 3GPP Technical Specification 23.236 version 1.0.0, "Intra Domain connection of radio access network RAN nodes to multiple CN nodes".

The basic concept of Iu-Flexibility is based on the idea that the serving node, i.e. a node that provides a communications service to a mobile station MS, assigns a Network Resource Identifier (NRI) to the mobile station MS at its first attach to a core network CN node, e.g., to a Mobile Switching Centre MSC or to a Serving GPRS Support Node SGSN. The Network Resource Identifier NRI is coded in the Temporary Mobile Subscriber Identity TMSI and by this transported to the mobile station MS and stored on its Subscriber Identity Module SIM. At a next mobile originating request the Network Resource Identifier NRI is included in the request and analysed in a so-called NAS node selection function (NNSF) in the radio access network RAN nodes. Depending on the mode of operation, which is indicated e.g. by the interface type A, Gb or Iu, the Network Resource Identifier NRI is provided in different parameters. The radio access network RAN nodes will use the Network Resource Identifier NRI to determine the related core network CN node and route the request to that node. Only if the received Network Resource Identifier NRI is not known in the radio access network RAN nodes, or if no Network Resource Identifier NRI is present, the NAS node selection function NNSF will select a new core network CN node as destination.

The concept of Iu-Flexibility can be used for infrastructure sharing. E.g., two core network CN operators, each of them with a pool of core network CN nodes, can share one common radio access network RAN. Neighbouring pools are allowed to overlap with respect to their service area if Network Resource Identifier NRI ranges are divided between the pools. If each of the core network CN nodes of a certain core network CN node pool only assigns new NRIs from it's range to Mobile Stations MS, then it is possible to keep a mobile station MS always within this pool of nodes. The current solution requires therefore a corresponding adjustment of the NAS node selection function NNSF in the radio access network RAN nodes.

In this use-case it is required to keep a mobile station MS within a certain pool of network nodes. It is currently discussed to reject a communications service request, e.g., a location update request, a routing area request or an originating call setup request from the core network CN back to the radio access network RAN and to trigger the NAS node selection function NNSF to select a node from another pool operated by another core network CN operator.

In the initial attach of a mobile station MS there is either no or an unknown Network Resource Identifier NRI included in the mobile originating access request message sent to the radio access network RAN nodes, e.g. after first power-on of a mobile station MS or after changing the Public Land Mobile Network PLMN. In this case, the NAS node selection function NNSF will select one of the available nodes in the core network CN - which might be one of the 'wrong' operators.

As described, the currently discussed solution is based on a rejection of such communications service request by the selected core network CN node, if this node is not entitled to process the requested service, see for example document WO 01/41478. The communications service request is routed back to the NAS node selection function NNSF located in the radio access network RAN for selection of another core network CN node. In other words, the subscriber is redirected to another core network CN node. If multiple core network CN operators share the radio access network RAN then multiple hops might be needed to reach the a core network CN node of the correct core network CN operator. This is basically due to the fact that the selection in the NAS node selection function NNSF is random among the remaining nodes.

The currently discussed solution would furthermore require completely new functions in both RAN-nodes and core network CN nodes, where as the real benefit is only on core network CN side. The currently discussed solution is also limited to the purpose of selecting a core network CN node of an appropriate core network CN operator. In addition, multiple redirections can cause significant delays in the processing of communications service requests.

Therefore it is an object of the invention to provide an improved method and device for a subscriber redirection in a communications system comprising pooled network nodes.

### Summary of the invention

The object is solved by the teaching of the independent claims.

The invention refers to a network node of a communications system, in particular a network node of a core network, for providing communications services. The network node comprises a processor arrangement for processing communications requests, an interface arrangement for connecting the network node to further nodes of the communications system and for receiving a communications service request, and a memory arrangement. The processor arrangement is connected to the interface arrangement and the memory arrangement. The memory arrangement is adapted to store a first set of network resource identifiers in relation to a first type, said first type indicating network resource identifiers of further network resources of the communications system. E.g., the first type can refer to foreign network resource identifiers NRIs, i.e. the first set comprises network resources identifiers identifying network nodes of a foreign network.

The processor arrangement is adapted to determine from the communications service request received via the interface arrangement, whether the node is entitled to provide the requested communications service. E.g., if the communications service request is an initial request, it usually comprises the International Mobile Subscriber Identity IMSI of the subscriber. The IMSI comprises a Mobile Network Code MNC, by means of which the network node can determine the entitlement for service provisioning. Further requests for communications service provisioning can comprise the MNC as well, which allow the network node to check its entitlement for service provisioning.

The processor arrangement is further adapted to select a network resource identifier from the first set and to redirect the communications service request by means of the interface arrangement to the network resource identified by the selected network resource identifier, if the network node is not entitled to provide the requested communications service.

In a further aspect refers the invention to a method for redirecting subscribers by a network node of a communications system, in particular a network node of a core network, wherein a communications service request requesting a communications service provisioning is received. From the communications service request is determined, whether the network node is entitled to provide the requested communications service. If the node is not entitled to provide the requested communications service, a network resource identifier is selected from a first set of network resource identifiers being related to a first type, said first type indicating that the related network resource identifiers identify further network resources, and the communications service request is redirected to a network resource identified by the selected network resource identifier.

In the following are further embodiments of the invention described with respect to the dependent claims.

One embodiment of the invention refers to the network node, wherein network identifiers of the first type identify network resources of a foreign network operator. E.g., the first type can be a type 'foreign NRI'.

Another embodiment of the invention refers to a network node, wherein network identifiers of the first type identify network resources that can provide a dedicated service, which cannot be provided by the network node. E.g., the first type can be a type 'Multimedia Messaging Service'.

A further embodiment refers to a network node. The received communications service request comprises a network parameter, e.g. a Mobile Network Code MNC. The determination of the service provisioning entitlement comprises an evaluation, whether the network parameter value indicates the network of the network node, e.g. the home network of the subscriber. The network node is entitled for service provisioning if the network parameter value indicates the network of the network node, e.g. if the network node belongs to the home network of the subscriber.

In another embodiment referring to the network node is the memory arrangement further adapted to store a second set of network resource identifiers in relation to a second type, e.g. a second type 'own NRI'. The second type indicates network resource identifiers identifying the network node. Typically, these identifiers can be are used e.g. by other network nodes or a radio access network to identify the network node. The received communications service request comprises a network resource identifier parameter, wherein the determination of the service provisioning entitlement comprises an evaluation, whether the network parameter value indicates a network resource identifier of the second type. The network node is entitled for service provisioning, if the network resource identifier parameter value indicates a network resource identifier of the second type.

In a further embodiment referring to the network node comprises the memory arrangement a FIFO-queue, i.e. a first-in-first-out queue, adapted to store data, e.g. Temporary Mobile Subscriber Identities TMSIs each comprising an NRI, or a NRI as such. The data comprise network resource identifiers of the first type. The selection of a first type network resource identifier is performed by means of the FIFO-queue, such that a time between selections of the same network resource identifier is maximized, in other words, as soon as an NRI has been taken from the output side of the queue by the selection, it is put again into the queue on its input side.

Another embodiment refers to a communication system comprising at least a first and a second core network, each comprising a plurality of network nodes according to the invention, and a common access network. The first set of network resource identifiers stored at a network node of the first core network comprises all network resource identifiers of network nodes of the second core network available for redirection of communication service requests to the second core network.

A further embodiment refers to a communication system comprising at least a first and a second core network, each comprising a plurality of network nodes according to the invention, and a common access network. The first set of network resource identifiers stored at a network node of the first core network comprises dedicated network resource identifiers of network nodes of the second core network available for redirection of communication service requests to the second core network. Any network resource identifier of a network node of the second core network is uniquely stored in a first set of network resource identifiers in the first core network. In other words, duplicates of network resources identifiers of the first type are not assigned within the plurality of first sets of network resource identifiers.

Another embodiment refers to the method, wherein network identifiers of the first type identify network resources of a foreign network operator.

A further embodiment refers to the method, wherein network identifiers of the first type identify network resources that can provide a dedicated service, which cannot be provided by the network node.

Another embodiment refers to the method, wherein the received communications service request comprises a network parameter. The determination of the service provisioning entitlement comprises an evaluation, whether the network parameter value indicates the network of the network node. The network node is entitled for service provisioning if the network parameter value indicates the network of the network node.

A further embodiment refers to the method, wherein a second set of network resource identifiers is related to a second type, said second type indicating network resource identifiers identifying the network node. The received communications service request comprises a network resource identifier parameter. The determination of the service provisioning entitlement comprises an evaluation, whether the network parameter value indicates a network resource identifier of the second type. The network node is entitled for service provisioning if the network resource identifier parameter value indicates a network resource identifier of the second type.

Another embodiment refers to the method, wherein the selection of a first type network resource identifier from the first set is performed such that the time until a reuse of the same network resource identifier for a redirection is maximized.

A further embodiment refers to a method in a communication system that comprises at least a first and a second core network, each comprising a plurality of network nodes, and a common access network. The method according to the invention comprises a further step of configuring the communication system, such that the first set of network resource identifiers stored in at least one network node of the first core network comprises all network resource identifiers of network nodes of the second core network available for redirection of communication service requests to the second core network.

Another embodiment refers to a method in a communication system that comprises at least a first and a second core network, each comprising a plurality of network nodes, and a common access network. The method according to the invention comprises the further step of configuring the communication system, such that each first set of network resource identifiers stored at a network node of the first core network comprises dedicated network resource identifiers of network nodes of the second core network available for redirection of communication service requests to the second core network. Any network resource identifier of a network node of the second core network is uniquely assigned to a first set of network resource identifiers in the first core network.

### Brief description of the figures

The invention is explained in the following in more detail with reference to the figures, which show
- Fig. 1:: an embodiment of the network resource identifier NRI configuration using shared foreign NRIs, and
- Fig. 2:: an embodiment of the network resource identifier NRI configuration using dedicated foreign NRIs.

### Detailed description of embodiments

The invention allows to use the general concept of connecting radio access network RAN nodes to multiple core network CN nodes in order to redirect subscribers in a controlled way from one serving core network CN node to another core network CN node without introducing new procedures and messages on the A, Gb and Iu interfaces. Embodiments described in the following refer to the support of infrastructure sharing in mobile networks, further embodiments describe the support of specific services available in dedicated nodes of a pool only, so that a mobile station MS, which requests such a service or provides a corresponding capability or subscription for such a service, can be sent to the specific, i.e. appropriate node.

In order to explain the invention with respect to the shared infrastructure embodiments, the terms 'own Network Resource Identifier NRI' and 'foreign Network Resource Identifier NRI' are introduced. Preferably, these terms refer to a logical concept, i.e. the data structure of both types of Network Resource Identifiers NRIs can be the same. However, foreign NRIs are categorized as being of a first type, and own NRIs as being of a second type. In general, an own Network Resource Identifier NRI is a Network Resource Identifier NRI that is used to identify a core network CN node within the own pool. The values from the set of own NRIs are used by a core network CN node to get follow on request routed back to the same node. A foreign NRI has a Network Resource Identifier NRI value that identifies a different core network CN node. A Temporary Mobile Subscriber Identifier TMSI that includes the foreign Network Resource Identifier NRI is assigned by a core network CN node to move a subscriber to the foreign node. In other words, a node from one pool temporarily assigns a Temporary Mobile Subscriber Identity TMSI with a foreign Network Resource Identifier NRI to a mobile station MS. With the next network access the NAS node selection function NNSF in the radio access network RAN will route this request according to the Network Resource Identifier NRI to the foreign node.

According to the invention, in the concept of shared foreign Network Resource Identifier NRI are preferably all but at least one core network CN node provided with two sets of Network Resource Identifiers NRIs, i.e. one or more own Network Resource Identifier NRI and a set of foreign Network Resource Identifiers NRIs. The own Network Resource Identifiers NRIs are used in the same way as currently described with respect to Network Resource Identifiers NRIs in the 3GPP Technical Specification 23.236 version 1.0.0. In addition, a core network CN node uses a foreign NRI if it detects that a certain subscriber has to be moved to another other pool's node.

The detection can be performed e.g. for initial communication service requests based on the International Mobile Subscriber Identity IMSI, which comprises a Mobile Network Code MNC and a Mobile Country Code MCC. E.g., if the MNC given in the IMSI does not correspond to the MNC of the network node, but to the MNC of the operator's network, with which the radio access network is shared, the subscriber is to be redirected.

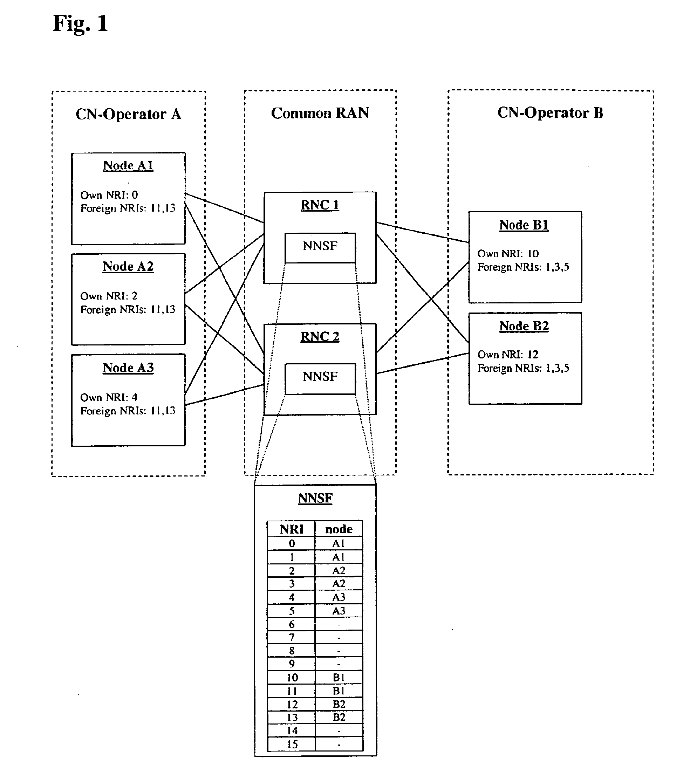

Fig. 1 shows an example for an embodiment applying shared foreign Network Resource Identifier NRI values in a communications system, where two core network CN operators use one common radio access network RAN by the mechanisms provided by Iu-Flexibility.

The specific numbers given in the following, e.g. numbers of bits etc., illustrate just an example for implementation, and do not limit the invention in anyway.

Referring to Fig. 1, the network of operator A has three core network CN nodes (A1, A2, A3), CN-operator B owns two nodes (B1, B2). The two core network CN operators agreed to use a Network Resource Identifier NRI length of 4-bit and they further agreed that Network Resource Identifier NRI values 0-9 will identify nodes from operator A and 10-15 will identify nodes from operator B.

Operator A has chosen a configuration, wherein node A1 is identified by Network Resource Identifier NRI values '0' and '1', node A2 by Network Resource Identifier NRI '2' and '3' and node A3 by Network Resource Identifier NRI '4' and '5'. Only the first value of each node is configured as own NRI, the other values (1,3,5) are provided to operator B to be configured as foreign NRIs in operator B's nodes. Operator B does a similar process so operator A gets Network Resource Identifier NRI values '11' and '13' as foreign NRIs for his nodes.

The NAS node selection function NNSF in the radio access network RAN does not see any difference between foreign and own NRIs. Whenever a Network Resource Identifier NRI is received and can be resolved to a core network CN nodes address, the request is routed. If a core network CN address cannot be determined, then one of the available nodes (A1, A2, A3, B1, B2) is selected by the NAS node selection function NNSF.

One embodiment of the invention refers to the selection of a Temporary Mobile Subscriber Identity TMSI with a foreign NRI for the purpose of a redirection. Usually, TMSIs are re-used due to the limited address range. Preferably, the core network CN node maximizes the elapsed time between assignments of the same Temporary Mobile Subscriber Identity TMSI value. This is useful, if no indication is provided to the core network CN node, if this Temporary Mobile Subscriber Identity TMSI is replaced in the mobile station MS by another Temporary Mobile Subscriber Identity TMSI by a foreign node, as it avoids duplicate assignments of the same TMSI. If a huge amount of subscribers is expected to be moved between core network CN nodes, preferably multiple Network Resource Identifier NRI values are used as foreign Network Resource Identifiers NRI per node to ensure the unity of TMSIs.

Maximizing the elapsed time until anew assignment of a certain TMSI is preferably realised by using a first-in first-out queue FIFO for administrating the released TMSIs.

Advantageously, there are no new A, Gb and Iu interface procedures needed by applying to the invention. Furthermore, the amount of needed Network Resource Identifier NRI values is minimised. The configuration is easy, since foreign NRIs are identical in all nodes of one operator. If operator A has n nodes and operator B m nodes then only 2(m+n) Network Resource Identifier NRI values are necessary.

In the described embodiment, new functionality in the core network CN nodes is required: separate lists for own and foreign NRIs and a distribution function to select one of the foreign NRIs. Such a distribution function can advantageously be used in SGSNs as well, e.g. for SRSN relocation.

A further embodiment refers to a mobile station MS, which is not reachable for terminating calls until a final registration in the correct core network CN node has been fulfilled. The period of time, in which the mobile station is not reachable, is minimized by sending an incorrect Location Area Information LAI within a 'misused' attach accept message over the air interface.

Since all nodes of one operator share the foreign NRI's of the other operator, duplicated assignment of the same TMSI is possible, e.g. node A1 and A3 can assign the same Temporary Mobile Subscriber Identity TMSI to a mobile station MS that should be redirected to node B2.

In one embodiment, an identification procedure is executed to request the International Mobile Subscriber Identity IMSI from the mobile station MS. This is useful, if the request to the "correct CN" is based on a TMSI, wherein the IMSI of the mobile station MS is not available in this core network CN node. In this embodiment, the IMSI can be used e.g. to access the correct Home Location Register HLR, which administrates the subscriber.

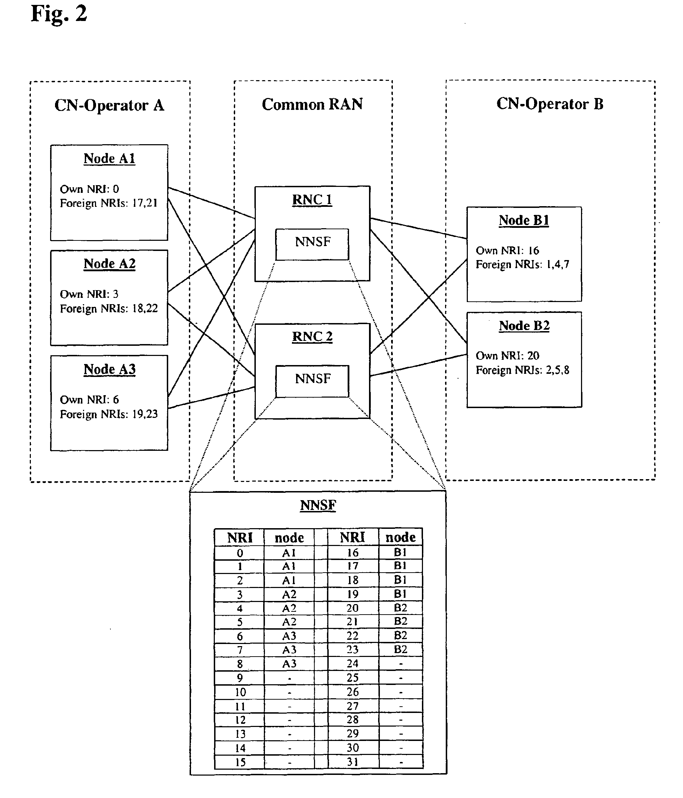

In the following is a further embodiment of the invention described with respect to Figure 2, which uses dedicated foreign Network Resource Identifiers NRIs. Advantageously, this embodiment eliminates the risk that multiple nodes in one operators network may assign the same Temporary Mobile Subscriber Identity TMSI to different mobile stations MSs for the purpose of redirection. In addition, it also solves the problem of being not reachable for terminating calls for some time.

In this embodiment, a core network CN node has a different set of foreign NRIs to redirect subscribers. So there is no possibility any more that two nodes assign identical Temporary Mobile Subscriber Identities TMSIs to mobile stations MS that should be redirected. Figure 2 shows the same network structure as the already explained figure 1, but now configured according to the dedicated foreign Network Resource Identifier NRI embodiment.

In the shown example, the nodes of operator A are now identified by Network Resource Identifier NRI values '0' to '15'. Operator B has the Network Resource Identifier NRI range of '16' to '31'. So in total 32 Network Resource Identifier NRI values are used, requiring a Network Resource Identifier NRI length of 5 bit.

Every node requires a at least one own Network Resource Identifier NRI plus one additional dedicated foreign Network Resource Identifier NRI to be addressed by every node of the other operator's pool of core network CN nodes. So for every core network CN node the amount 'one plus the number of core network CN nodes in the other operator's pool' NRIs are required.

In general if Operator A has n nodes in the area and operator B m nodes, this requires:

| | |
|---|---|
| n * (m+1) | NRIs in operator A's nodes |
| m* (n+1) | NRIs in operator B's nodes |

The total number of NRIs in the NAS node selection function NNSF results in 2 * n * m + n + m.

Advantageously, the embodiment of the invention referring to dedicated foreign NRIs does not require new A, Gb and Iu interface procedures. The use of separated Temporary Mobile Subscriber Identity TMSI values, and therefore the use of separated NRI values in every node for the purpose of redirection of subscribers eliminates the risk to allocate the same Temporary Mobile Subscriber Identity TMSI by different nodes in a duplicate way. The 'correct' core network CN node is aware of the originator of the redirected MS. So the IMSI (and other data) can be fetched from this node, and does not need to be transmitted via the air interface. This results in an increased confidentiality of subscriber data compared to existing systems. In addition, the mobile station MS can be made reachable for terminating calls, e.g. by means of a signalling message to the HLR, while being attached to a 'wrong' core network node CN.

As new functionality in the core network CN nodes are separate lists for own and foreign NRIs used. A distribution function is introduced to select one of the foreign NRIs. The selection can preferably be a random selection. In a further embodiment is the selection function used in SGSNs, e.g. for the purpose of SRSN relocation.

In a further embodiment, core network CN nodes providing an implementation according to shared and dedicated NRIs can co-exist. It is not necessary, that e.g. each SGSN of a network comprises the same embodiment.

Furthermore, it is possible that a core network CN node provides both embodiments, e.g. to allow an operator to choose, e.g. by operation and maintenance means, the embodiment to be used.

The invention and its embodiments show that there are possibilities to support shared infrastructure solutions by an appropriate planning of the Network Resource Identifier NRI usage. The solutions have no impact on the mobile station MS and NAS node selection function NNSF in the radio access network RAN, and especially they do not require any new procedures and messages on the radio access network RAN-core network CN interface. The functions that need to be introduced in the current concept of Iu-Flex is the differentiation between own and foreign Network Resource Identifier NRI values and the support of a distribution function to select a foreign NRI.

In a further embodiment, the described mechanism cannot only be used to move MSs from one operator's nodes to other nodes; it is also applicable within one operator's pool. One example may be that some mobile stations MS require capabilities that are not supported by all nodes in a pool, so that these MS may be redirected to one specific node providing these capabilities. In this embodiment, the core network CN node stores as well separated sets of NRIs, wherein the separation reflects different services or service classes that are available in the pool.

The support of a shared radio infrastructure allows interoperability in a shared infrastructure environment between equipment of multiple vendors. Increased reliability and service availability in the core network CN is reached by the flexibility and reliability of the "Intra Domain connection of radio access network RAN nodes to multiple core network CN nodes" concept and the cost benefits of a shared radio infrastructure.

## Claims

1. Network node of a mobile communications system, in particular a network node of a core network, for providing communications services, comprising a processor arrangement for processing communications requests, an interface arrangement for connecting the network node to further nodes of the communications system and for receiving a communications service request, a memory arrangement,
wherein the processor arrangement is connected to the interface arrangement and the memory arrangement,
the processor arrangement is adapted to determine from the communications service request received via the interface arrangement, whether the node is entitled to provide the requested communications service,
**characterised in that**
the memory arrangement is adapted to store a first set of network resource identifiers in relation to a first type, said first type indicating network resource identifiers of further network resources of the communications system, the processor arrangement is further adapted to select a network resource identifier from the first set and to redirect the communications service request by means of the interface arrangement to the network resource identified by the selected network resource identifier, if the network node is not entitled to provide the requested communications service.

2. The network node according to claim 1, wherein network identifiers of the first type identify network resources of a foreign network operator.

3. The network node according to claim 1, wherein network identifiers of the first type identify network resources that can provide a dedicated service, which cannot be provided by the network node.

4. The network node according to any preceding claim, wherein the received communications service request comprises a network parameter, wherein the determination of the service provisioning entitlement comprises an evaluation, whether the network parameter value indicates the network of the network node, and wherein the network node is entitled for service provisioning if the network parameter value indicates the network of the network node.

5. The network node according to any preceding claim, wherein the memory arrangement is further adapted to store a second set of network resource identifiers in relation to a second type, said second type indicating network resource identifiers identifying the network node, wherein the received communications service request comprises a network resource identifier parameter, wherein the determination of the service provisioning entitlement comprises an evaluation, whether the network parameter value indicates a network resource identifier of the second type, and wherein the network node is entitled for service provisioning if the network resource identifier parameter value indicates a network resource identifier of the second type.

6. The network node according to any preceding claim, wherein the memory arrangement comprises a first-in-first-out queue abbreviated as FIFO-queue adapted to store data comprising network resource identifiers of the first type, wherein the selection of a first type network resource identifier is performed by means of the FIFO-queue, such that a time between selections of the same network resource identifier is maximized.

7. A communication system comprising at least a first and a second core network, each comprising a plurality of network nodes according to any of the preceding network node claims, and a common access network, wherein the first set of network resource identifiers stored at a network node of the first core network comprises all network resource identifiers of network nodes of the second core network available for redirection of communication service requests to the second core network.

8. A communication system comprising at least a first and a second core network, each comprising a plurality of network nodes according to any of the preceding network node claims, and a common access network, wherein the first set of network resource identifiers stored at a network node of the first core network comprises dedicated network resource identifiers of network nodes of the second core network available for redirection of communication service requests to the second core network, and wherein any network resource identifier of a network node of the second core network is uniquely stored in a first set of network resource identifiers in the first core network.

9. Method for redirecting subscribers by a network node of a mobile communications system, in particular a network node of a core network, wherein a communications service request requesting a communications service provisioning is received, said method comprising the steps :
- from the communications service request is determined, whether the network node is entitled to provide the requested communications service, and if the node is not entitled to provide the requested communications service
- - a network resource identifier is selected from a first set of network resource identifiers being related to a first type, said first type indicating that the related network resource identifiers identify further network resources, and
- - the communications service request is redirected to a network resource identified by the selected network resource identifier.

10. The method according to the preceding method claim, wherein network identifiers of the first type identify network resources of a foreign network operator.

11. The method according to any of the preceding method claims, wherein network identifiers of the first type identify network resources that can provide a dedicated service, which cannot be provided by the network node.

12. The method according to any of the preceding method claims, wherein the received communications service request comprises a network parameter, wherein the determination of the service provisioning entitlement comprises an evaluation, whether the network parameter value indicates the network of the network node, and wherein the network node is entitled for service provisioning if the network parameter value indicates the network of the network node.

13. The method according to any of the preceding method claims, wherein a second set of network resource identifiers is related to a second type, said second type indicating network resource identifiers identifying the network node, wherein the received communications service request comprises a network resource identifier parameter, wherein the determination of the service provisioning entitlement comprises an evaluation, whether the network parameter value indicates a network resource identifier of the second type, and wherein the network node is entitled for service provisioning if the network resource identifier parameter value indicates a network resource identifier of the second type.

14. The method according to any of the preceding method claims, wherein the selection of a first type network resource identifier from the first set is performed such that the time until a reuse of the same network resource identifier for a redirection is maximized.

15. A method according to any of the preceding method claims, wherein a communication system comprises at least a first and a second core network, each comprising a plurality of network nodes, and a common access network, comprising the further step of configuring the system, such that the first set of network resource identifiers stored in at least one network node of the first core network comprises all network resource identifiers of network nodes of the second core network available for redirection of communication service requests to the second core network.

16. A method according to any of the method claims 9 to 14, wherein a communication system comprises at least a first and a second core network, each comprising a plurality of network nodes, and a common access network, said method comprising the further step of configuring the communication system, such that each first set of network resource identifiers stored at a network node of the first core network comprises dedicated network resource identifiers of network nodes of the second core network available for redirection of communication service requests-to the second core network, wherein any network resource identifier of a network node of the second core network is uniquely assigned to a first set of network resource identifiers in the first core network.

## Patentansprüche

1. Netzknoten eines Mobilkommunikationssystems, insbesondere ein Netzknoten eines Kernnetzes, zum Bereitstellen von Kommunikationsdiensten, der Folgendes umfasst: eine Prozessoranordnung zum Verarbeiten von Kommunikationsanforderungen,
eine Schnittstellenanordnung zum Verbinden des Netzknotens mit weiteren Knoten des Kommunikationssystems und zum Empfangen einer Kommunikationsdienstanforderung,
eine Speicheranordnung,
wobei die Prozessoranordnung mit der Schnittstellenanordnung und der Speicheranordnung verbunden ist,
die Prozessoranordnung dazu eingerichtet ist, aus der Kommunikationsdienstanforderung, die über die Schnittstellenanordnung empfangen wurde, zu bestimmen, ob der Knoten dazu berechtigt ist, den angeforderten Kommunikationsdienst bereitzustellen,
**dadurch gekennzeichnet, dass**
die Speicheranordnung dazu eingerichtet ist, einen ersten Satz von Netzressourcenidentifikatoren zu speichern, die mit einem ersten Typ in Zusammenhang stehen,
wobei der erste Typ Netzressourcenidentifikatoren von weiteren Netzressourcen des Kommunikationssystems anzeigt,
die Prozessoranordnung weiterhin dazu eingerichtet ist, einen Netzressourcenidentifikator aus dem ersten Satz auszuwählen und die Kommunikationsdienstanforderung mittels der Schnittstellenanordnung zu der Netzressource umzuleiten, die von dem ausgewählten Netzressourcenidentifikator identifiziert wurde, wenn der Netzknoten nicht dazu berechtigt ist, den angeforderten Kommunikationsdienst bereitzustellen.

2. Netzknoten nach Anspruch 1, wobei Netzidentifikatoren des ersten Typs Netzressourcen eines Fremdnetzbetreibers identifizieren.

3. Netzknoten nach Anspruch 1, wobei Netzidentifikatoren des ersten Typs Netzressourcen identifizieren, die einen dedizierten Dienst bereitstellen können, der von dem Netzknoten nicht bereitgestellt werden kann.

4. Netzknoten nach einem der vorhergehenden Ansprüche, wobei die empfangene Kommunikationsdienstanforderung einen Netzparameter umfasst, wobei die Bestimmung der Dienstbereitstellungsberechtigung eine Ermittlung umfasst, ob der Netzparameterwert das Netz des Netzknotens anzeigt, und wobei der Netzknoten zur Dienstbereitstellung berechtigt ist, wenn der Netzparameterwert das Netz des Netzknotens anzeigt.

5. Netzknoten nach einem der vorhergehenden Ansprüche, wobei die Speicheranordnung weiterhin dazu eingerichtet ist, einen zweiten Satz von Netzressourcenidentifikatoren zu speichern, die mit einem zweiten Typ in Zusammenhange stehen, wobei der zweite Typ Netzressourcenidentifikatoren anzeigt, die den Netzknoten identifizieren, wobei die empfangene Kommunikationsdienstanforderung einen Netzressourcenidentifikatorparameter umfasst, wobei die Bestimmung der Dienstbereitstellungsberechtigung eine Ermittlung umfasst, ob der Netzparameterwert einen Netzressourcenidentifikator des zweiten Typs anzeigt, und wobei der Netzknoten zur Dienstbereitstellung berechtigt ist, wenn der Netzressourcenidentifikatorparameterwert einen Netzressourcenidentifikator des zweiten Typs anzeigt.

6. Netzknoten nach einem der vorhergehenden Ansprüche, wobei die Speicheranordnung eine First-In-First-Out-Warteschlange, als FIFO-Warteschlange abgekürzt, umfasst, die dazu eingerichtet ist, Daten zu speichern, die Netzressourcenidentifikatoren des ersten Typs umfassen, wobei die Auswahl eines Netzressourcenidentifikators des ersten Typs mit der FIFO-Warteschlange derart durchgeführt wird, dass eine Zeit zwischen Auswahlen desselben Netzressourcenidentifikators maximiert wird.

7. Kommunikationssystem, das mindestens ein erstes und ein zweites Kernnetz, die jeweils mehrere Netzknoten gemäß einem der vorhergehenden Netzknotenansprüche umfassen, und ein gemeinsames Zugriffsnetz umfasst, wobei der erste Satz von Netzressourcenidentifikatoren, der an einem Netzknoten des ersten Kernnetzes gespeichert ist, alle Netzressourcenidentifikatoren von Netzknoten des zweiten Kernnetzes umfasst, die zur Umleitung von Kommunikationsdienstanforderungen zu dem zweiten Kernnetz verfügbar sind.

8. Kommunikationssystem, das mindestens ein erstes und ein zweites Kernnetz, die jeweils mehrere Netzknoten gemäß einem der vorhergehenden Netzknotenansprüche umfassen, und ein gemeinsames Zugriffsnetz umfasst, wobei der erste Satz von Netzressourcenidentifikatoren, der an einem Netzknoten des ersten Kernnetzes gespeichert ist, dedizierte Netzressourcenidentifikatoren von Netzknoten des zweiten Kernnetzes umfasst, die zur Umleitung von Kommunikationsdienstanforderungen zu dem zweiten Kernnetz verfügbar sind, und wobei ein beliebiger Netzressourcenidentifikator eines Netzknotens des zweiten Kernnetzes einmalig in einem ersten Satz von Netzressourcenidentifikatoren in dem ersten Kernnetz gespeichert wird.

9. Verfahren zum Umleiten von Teilnehmern durch einen Netzknoten eines Mobilkommunikationssystems, insbesondere einen Netzknoten eines Kernnetzes, wobei eine Kommunikationsdienstanforderung, die eine Kommunikationsdienstbereitstellung anfordert, empfangen wird, wobei das Verfahren die folgenden Schritte umfasst:
- aus der Kommunikationsdienstanforderung wird bestimmt, ob der Netzknoten dazu berechtigt ist, den angeforderten Kommunikationsdienst bereitzustellen, und wenn der Knoten den angeforderten Kommunikationsdienst bereitzustellen nicht berechtigt ist,:
-- ein Netzressourcenidentifikator wird aus einem ersten Satz von Netzressourcenidentifikatoren, die mit einem ersten Typ in Zusammenhang stehen, ausgewählt, wobei der erste Typ anzeigt, dass die damit in Zusammenhang stehenden Netzressourcenidentifikatoren weitere Netzressourcen identifizieren, und
-- die Kommunikationsdienstanforderung wird zu einer Netzressource umgeleitet, die von dem ausgewählten Netzressourcenidentifikator identifiziert wurde.

10. Verfahren nach dem vorhergehenden Verfahrensanspruch, wobei Netzidentifikatoren des ersten Typs Netzressourcen eines Fremdnetzbetreibers identifizieren.

11. Verfahren nach einem der vorhergehenden Verfahrensansprüche, wobei Netzidentifikatoren des ersten Typs Netzressourcen identifizieren, die einen dedizierten Dienst bereitstellen können, der von dem Netzknoten nicht bereitgestellt werden kann.

12. Verfahren nach einem der vorhergehenden Verfahrensansprüche, wobei die empfangene Kommunikationsdienstanforderung einen Netzparameter umfasst, wobei die Bestimmung der Dienstbereitstellungsberechtigung eine Ermittlung umfasst, ob der Netzparameterwert das Netz des Netzknotens anzeigt, und wobei der Netzknoten zur Dienstbereitstellung berechtigt ist, wenn der Netzparameterwert das Netz des Netzknotens anzeigt.

13. Verfahren nach einem der vorhergehenden Verfahrensansprüche, wobei ein zweiter Satz von Netzressourcenidentifikatoren mit einem zweiten Typ in Zusammenhang steht, wobei der zweite Typ Netzressourcenidentifikatoren anzeigt, die den Netzknoten identifizieren, wobei die empfangene Kommunikationsdienstanforderung einen Netzressourcenidentifikatorparameter umfasst, wobei die Bestimmung der Dienstbereitstellungsberechtigung eine Ermittlung umfasst, ob der Netzparameterwert einen Netzressourcenidentifikator des zweiten Typs anzeigt, und wobei der Netzknoten zur Dienstbereitstellung berechtigt ist, wenn der Netzressourcenidentifikatorparameterwert einen Netzressourcenidentifikator des zweiten Typs anzeigt.

14. Verfahren nach einem der vorhergehenden Verfahrensansprüche, wobei die Auswahl eines Netzressourcenidentifikators des ersten Typs aus dem ersten Satz derart durchgeführt wird, dass die Zeit bis zu einer Wiederverwendung desselben Netzressourcenidentifikators für eine Umleitung maximiert wird.

15. Verfahren nach einem der vorhergehenden Verfahrensansprüche, wobei ein Kommunikationssystem mindestens ein erstes und ein zweites Kernnetz, die jeweils mehrere Netzknoten umfassen, und ein gemeinsames Zugriffsnetz umfasst, wobei das Verfahren den weiteren Schritt des Konfigurierens des Systems umfasst, so dass der erste Satz von Netzressourcenidentifikatoren, der in mindestens einem Netzknoten des ersten Kernnetzes gespeichert ist, alle Netzressourcenidentifikatoren von Netzknoten des zweiten Kernnetzes umfasst, die zur Umleitung von Kommunikationsdienstanforderungen zu dem zweiten Kernnetz verfügbar sind.

16. Verfahren nach einem der Verfahrensansprüche 9 bis 14, wobei ein Kommunikationssystem mindestens ein erstes und ein zweites Kernnetz, die jeweils mehrere Netzknoten umfassen, und ein gemeinsames Zugriffsnetz umfasst, wobei das Verfahren den weiteren Schritt des Konfigurierens des Kommunikationssystems umfasst, so dass jeder erste Satz von Netzressourcenidentifikatoren, der an einem Netzknoten des ersten Kernnetzes gespeichert ist, dedizierte Netzressourcenidentifikatoren von Netzknoten des zweiten Kernnetzes umfasst, die zur Umleitung von Kommunikationsdienstanforderungen zu dem zweiten Kernnetz verfügbar sind, wobei ein beliebiger Netzressourcenidentifikator eines Netzknotens des zweiten Kernnetzes einmalig einem ersten Satz von Netzressourcenidentifikatoren in dem ersten Kernnetz zugeteilt wird.

## Revendications

1. Noeud de réseau d'un système de communication mobile, en particulier noeud de réseau d'un réseau central, destiné à fournir des services de communication, comprenant un dispositif de processeur pour traiter des demandes de communication, un dispositif d'interface pour connecter le noeud de réseau à d'autres noeuds du système de communication et pour recevoir une demande de service de communication, un dispositif de mémoire,
dans lequel le dispositif de processeur est connecté au dispositif d'interface et au dispositif de mémoire, le dispositif de processeur est adapté afin de déterminer à partir de la demande de service de communication reçue via le dispositif d'interface si le noeud est habilité à fournir le service de communication demandé,
**caractérisé en ce que**
le dispositif de mémoire est adapté afin de mémoriser un premier jeu d'identifiants de ressources de réseau en relation avec un premier type, ledit premier type indiquant des identifiants de ressources de réseau d'autres ressources de réseau du système de communication,
le dispositif de processeur est en outre adapté afin de sélectionner un identifiant de ressources de réseau dans le premier jeu et de rediriger la demande de service de communication au moyen du dispositif d'interface vers la ressource de réseau identifiée par l'identifiant de ressource de réseau identifié, si le noeud de réseau n'est pas habilité à fournir le service de communication demandé.

2. Noeud de réseau selon la revendication 1, dans lequel les identifiants de réseau du premier type identifient des ressources de réseau d'un opérateur de réseau étranger.

3. Noeud de réseau selon la revendication 1, dans lequel des identifiants de réseau du premier type identifient des ressources de réseau qui peuvent fournir un service dédié, ne pouvant pas être fourni par le noeud de réseau.

4. Noeud de réseau selon l'une quelconque des revendications précédentes, dans lequel la demande de service de communication reçue comprend un paramètre de réseau, moyennant quoi la détermination de l'habilitation à fournir des services comprend une évaluation consistant à savoir si la valeur de paramètre de réseau indique le réseau du noeud de réseau et moyennant quoi le noeud de réseau est habilité à fournir des services si la valeur de paramètre de réseau indique le réseau du noeud de réseau.

5. Noeud de réseau selon l'une quelconque des revendications précédentes, dans lequel le dispositif de mémoire est en outre adapté afin de mémoriser un second jeu d'identifiants de ressources de réseau en relation avec un second type, ledit second type indiquant des identifiants de ressources de réseau identifiant le noeud de réseau, dans lequel la demande de service de communication reçue comprend un paramètre d'identifiant de ressource de réseau, moyennant quoi la détermination de l'habilitation à fournir des services comprend une évaluation consistant à savoir si la valeur de paramètre de réseau indique un identifiant de ressource de réseau du second type et moyennant quoi le noeud de réseau est habilité à fournir des services si la valeur de paramètre d'identifiant de ressource de réseau indique un identifiant de ressource de réseau du second type.

6. Noeud de réseau selon l'une quelconque des revendications précédentes, dans lequel le dispositif de mémoire comprend une file d'attente FIFO (First in, First out) adaptée afin de mémoriser des données comprenant des identifiants de ressource de réseau du premier type, moyennant quoi la sélection d'un identifiant de ressource de réseau du premier type est effectuée au moyen de la file d'attente FIFO, de telle sorte qu'un temps entre les sélections du même identifiant de ressource de réseau soit maximisé.

7. Système de communication comprenant au moins un premier et un second réseau central, comprenant chacun une pluralité de noeuds de réseau selon l'une quelconque des revendications précédentes relatives au noeud de réseau, et un réseau d'accès commun, moyennant quoi le premier jeu d'identifiants de ressource de réseau mémorisé dans un noeud de réseau du premier réseau central comprend tous les identifiants de ressource de réseau des noeuds de réseau du second réseau central disponibles en vue d'une redirection des demandes de services de communication vers le second réseau central.

8. Système de communication comprenant au moins un premier et un second réseau central, comprenant chacun une pluralité de noeuds de réseau selon l'une quelconque des revendications précédentes relatives au noeud de réseau, et un réseau d'accès commun, moyennant quoi le premier jeu d'identifiants de ressources de réseau mémorisés dans un noeud de réseau du premier réseau central comprend des identifiants de ressources de réseau dédiés des noeuds de réseau du second réseau central disponibles en vue d'une redirection des demandes de services de communication vers le second réseau central et moyennant quoi n'importe quel identifiant de ressource de réseau d'un noeud de réseau du second réseau central est mémorisé de manière unique dans un premier jeu d'identifiants de ressources de réseau dans le premier réseau central.

9. Procédé de redirection des abonnées par un noeud de réseau d'un système de communication mobile, en particulier un noeud de réseau d'un réseau central,
dans lequel une demande de service de communication demandant une fourniture de service de communication est reçue,
ledit procédé comprenant les étapes consistant à :
- déterminer à partir de la demande de service de communication si le noeud de réseau est habilité à fournir le service de communication demandé et, au cas où le noeud n'est pas habilité à fournir le service de communication demandé,
- sélectionner un identifiant de ressource de réseau dans un premier jeu d'identifiants de ressource de réseau relatif à un premier type, ledit premier type indiquant que les identifiants de ressource de réseau relatifs identifient d'autres ressources de réseau, et
- rediriger la demande de service de communication vers une ressource de réseau identifiée par l'identifiant de ressource de réseau sélectionné.

10. Procédé selon la revendication précédente, dans lequel les identifiants de réseau du premier type identifient des ressources de réseau d'un opérateur de réseau étranger.

11. Procédé selon l'une quelconque des revendications de procédé précédentes, dans lequel des identifiants de réseau du premier type identifient des ressources de réseau qui peuvent fournir un service dédié, ne pouvant pas être fourni par le noeud de réseau.

12. Procédé selon l'une quelconque des revendications de procédé précédentes, dans lequel la demande de service de communication reçue comprend un paramètre de réseau, moyennant quoi la détermination de l'habilitation à fournir des services comprend une évaluation consistant à savoir si la valeur de paramètre de réseau indique le réseau du noeud de réseau et moyennant quoi le noeud de réseau est habilité à fournir des services si la valeur de paramètre de réseau indique le réseau du noeud de réseau.

13. Procédé selon l'une quelconque des revendications de procédé précédentes, dans lequel un second jeu d'identifiants de ressources de réseau est relatif à un second type, ledit second type indiquant des identifiants de ressources de réseau qui identifient le noeud de réseau, moyennant quoi la demande de service de communication reçue comprend un paramètre d'identifiant de ressource de réseau, moyennant quoi la détermination de l'habilitation à fournir des services comprend une évaluation consistant à savoir si la valeur de paramètre de réseau indique un identifiant de ressource de réseau du second type et moyennant quoi le noeud de réseau est habilité à fournir des services au cas où la valeur de paramètre d'identifiant de ressource de réseau indique un identifiant de ressource de réseau du second type.

14. Procédé selon l'une quelconque des revendications précédentes, dans lequel la sélection d'un identifiant de ressource de réseau du premier type dans le premier jeu est effectuée de telle sorte que le temps jusqu'à une réutilisation du même identifiant de ressource de réseau dans un but de redirection soit maximisé.

15. Procédé selon l'une quelconque des revendications de procédé précédentes, dans lequel un système de communication comprend au moins un premier et un second réseau central, comprenant chacun une pluralité de noeuds de réseau, et un réseau d'accès commun, comprenant l'étape supplémentaire de configuration du système, de telle sorte que le premier jeu d'identifiants de ressources de réseau mémorisé dans au moins un noeud de réseau du premier réseau central comprenne tous les identifiants de ressources de réseau des noeuds de réseau du second réseau central disponibles en vue d'une redirection des demandes de services de communication vers le second réseau central.

16. Procédé selon l'une quelconque des revendications 9 à 14, dans lequel un système de communication comprend au moins un premier et un second réseau central, comprenant chacun une pluralité de noeuds de réseau, et un réseau d'accès commun, ledit procédé comprenant l'étape supplémentaire de configuration du système de communication, de telle sorte que chaque premier jeu d'identifiants de ressources de réseau mémorisé dans un noeud de réseau du premier réseau central comprenne des identifiants de ressources de réseau dédiés des noeuds de réseau du second réseau central disponibles en vue d'une redirection des demandes de services de communication vers le second réseau central, moyennant quoi n'importe quel identifiant de ressource de réseau d'un noeud de réseau du second réseau central est assigné de manière unique à un premier jeu d'identifiants de ressources de réseau dans le premier réseau central.
